Europäisches Patentamt

European Patent Office

Office européen des brevets

(19)

(11) Publication number: 0 389 223 A2

# (12) EUROPEAN PATENT APPLICATION

(21) Application number: 90302933.8

(22) Date of filing: 19.03.90

(51) Int. Cl.5: A61C 7/12

(30) Priority: 20.03.89 US 325755

(43) Date of publication of application:
26.09.90 Bulletin 90/39

(84) Designated Contracting States:
AT BE CH DE ES FR GB IT LI LU NL SE

(71) Applicant: JOHNSON & JOHNSON CONSUMER PRODUCTS, INC.
501 George Street
New Brunswick New Jersey 08903(US)

(72) Inventor: Silva, Frank W.
1554 Enchantment Vista
CA 92083(US)
Inventor: Bolliger, Diane K.
10615 Dabney Drive, Apartment 21,
San Diego CA 92126(US)
Inventor: Strahan, Ralph
1826 Lilac Road
Ramona CA 92065(US)
Inventor: Merritt, Michael A.
4535 Sun Valley Road
Del Mar CA 92014(US)

(74) Representative: Fisher, Adrian John et al
CARPMAELS & RANSFORD 43 Bloomsbury Square
London WC1A 2RA(GB)

(54) Improved dental bracket configuration.

(57) A generally elliptical dental bracket is disclosed having a hemispherically shaped gingival tie wing and hemispherically shaped occlusal tie wing separated by an archwire slot. The bracket is aligned with the crown long axis to that the archwire slot is parallel with the occlusal plane. The overall shape of the bracket creates patient comfort, bracket strength and ease of manufacture.

# IMPROVED DENTAL BRACKET CONFIGURATION

## Field of the Invention

The present invention relates generally to improved configurations for dental brackets. More specifically, the present invention relates to improved dental bracket shapes such that the dental brackets have no squared edges. Most specifically, the present invention relates to an improved dental bracket configuration such that the dental brackets have no squared edges and a generally oval configuration. These improved designs create a dental bracket that fits more smoothly within the labial and buccal lining of the mouth.

## Background of the Invention

Generally, dental brackets have become smaller and smaller in the course of their development over the last thirty-five years. That is, the first orthodontic appliances were generally large, cumbersome, and quite difficult to adapt to the mouth. In many instances, they were quite painful for use by the patient. This led to less than widespread usage of such devices.

In recent years, dental brackets have taken on a more refined shape. They are smaller, and fit more readily in the mouth. They also have much smoother surfaces than previous dental brackets. These entirely new configurations, therefore, have caused a more widespread adoption of dental bracket usage.

However, even these dental brackets can be more burdensome than desired. Essentially, a dental bracket user requires that the dental brackets are barely noticeable, both in appearance and in tactile sensitivity to the buccal and labial surfaces of the mouth. Naturally, these two factors must be balanced with the requirement that the brackets are functional. Generally, therefore, brackets have been shaped such that the current generation are small, yet contain square edges which when emplaced on the teeth may irritate the buccal surface.

What is needed, therefore, is an entirely new shape of bracket wherein there are no sharp edges which come in contact with exposed surfaces.

It is a further object of the present invention to provide a dental bracket which provides support to the adjusting archwire while not presenting any raised surfaces to the buccal or labial surface.

It is yet another object of the present invention to provide a dental bracket having a generally oval shape with a generally spherical surface such that any raised surfaces are smoothly adapted to the buccal and labial lining.

Finally, it is yet another object of the present invention to provide all these configurations within an orthodontic appliance which retains a small, yet strong configuration.

## Summary of the Invention

These and other objects of the present invention are accomplished in an improved dental bracket configuration wherein the bracket has a reduced base for attachment to the tooth. The base culminates in gingival and occlusal or incisal tie wings which are attached to the base and separated by an archwire slot. The occlusal or incisal tie wing faces the occlusal or incisal side of the archwire slot and is configured with a generally curved edge. The gingival tie wing faces the gingival side of the archwire slot and is configured with a generally curved edge. This curved edge culminates in a neck or post having a pair of generally curved ligature edges. Thus, the bracket has an overall oval or even domed shape. This configuration makes the bracket more adaptable to the buccal and labial surfaces of the mouth, while retaining the size and strength of the more conventional dental brackets.

The objects of the present invention can be more easily understood by the accompanying drawings along with the detailed description of the invention, in which:

## Detailed Description of the Drawings

Fig. 1 is a top plan view of an improved configuration of the dental bracket;

Fig. 2 is a cross-sectional view of the dental bracket of the present invention taken along lines 2-2 in Fig. 1;

Fig. 3 is a cross-section of a preferred embodiment of the dental bracket of the present invention taken along lines 3-3 in Fig. 1;

Fig. 4 is a side view of the present invention; and

Fig. 5 is a side view of an alternate embodiment of the present invention.

## Detailed Description of the Invention

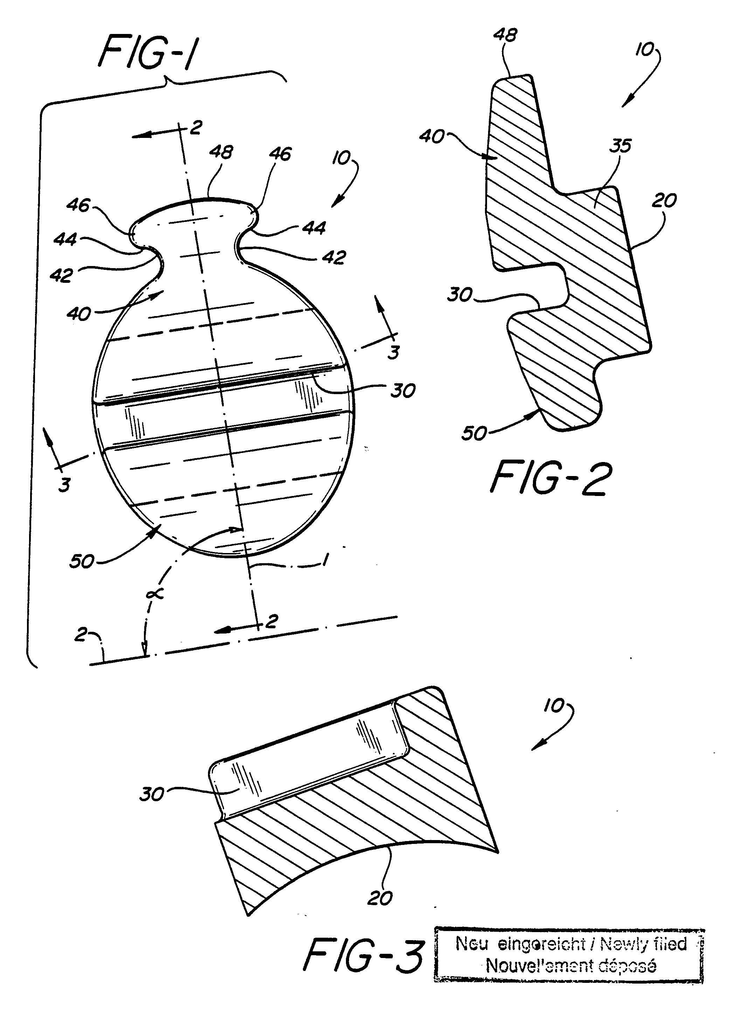

As seen from Figures 1-4, the present dental bracket 10 comprises a gingival tie wing 40 and an occlusal tie wing 50 separated by an archwire slot 30. The archwire slot 30 is supported by archwire slot supports 35 which form part of base 20. The base 20 is generally rectangular shaped and has a cusp shaped surface which can be bonded firmly to the tooth.

From the rectangular shaped base 20, the gingival tie wing 40 and occlusal tie wing 50 extend to form an appropriate support for archwire and ligatures. Both the occlusal tie wing 50 and gingival tie wing 40 are generally elliptical. Most desirably, they are somewhat oval in shape and will conform to the general shape of the tooth. The tie wings 40, 50 will also be generally rounded or hemispherically shaped so that they also conform to the buccal or labial surface of the mouth.

Extending from gingival tie wing 40 is a ligature post or neck 42. This post or neck 42 must also be generally round in shape and conform to the generally spherical shape of the gingival tie wing 40. The post 42 must be wide enough to adequately support attached ligature wires. Yet, the post 42 must also be small enough as to not become oversized for the general shape of the bracket 10.

From the post 42 extend the ligature edges 44. These ligature edges 44 comprise a pair of ligature knobs 46, which extend to the ligature heads 48. The combination 44, 46, 48 will form an adequate receptacle for ligature wires. It is to be noted that this combination 44, 46, 48 will also conform to the generally spherical shape of the gingival tie wing 40 as well as the oval or eliptical shape of the post or neck 42. As with post 42, the ligature knobs 46, while used for support, should not be oversized for the general shape of the bracket 10.

The gingival tie wing 40 and occlusal tie wing 50 are arranged so that the oval shape of the bracket 10 conforms to the crown long axis of the tooth. That is, the longest cross-sectional measurement of the gingival and occlusal tie wings 40, 50 will be along the crown long axis of the tooth. This allows for alignment ease during emplacement. Because the archwire slot 30 will be parallel to the occlusal plane 2, as in all straight wire dental brackets, the long axis 1 of the bracket will form an angle $\alpha$ with the plane 2 of the archwire slot 30. Of course, this angle $\alpha$ will vary from bracket to bracket dependent upon where the bracket is to be placed within the mouth.

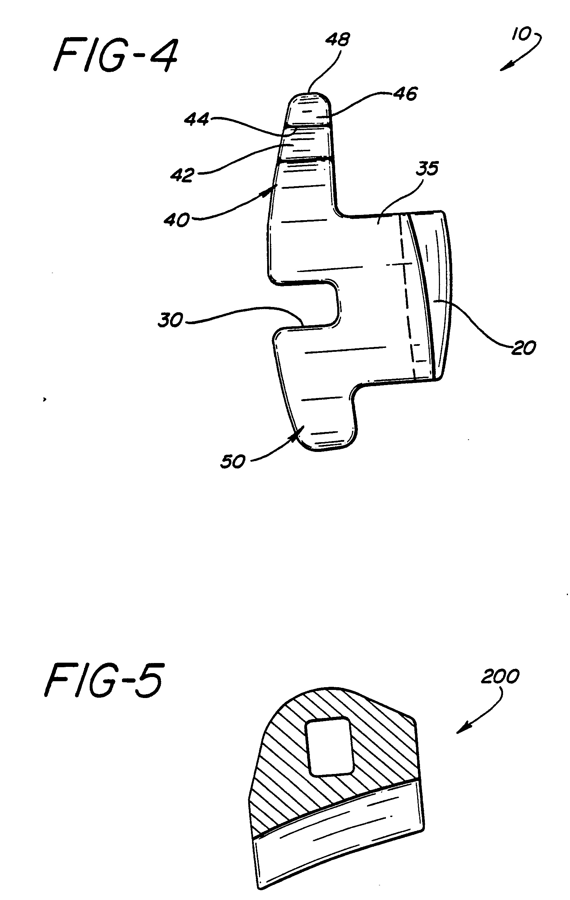

Alternately, as seen in Fig. 5, there is an alternate preferred embodiment of the present invention useful in the treatment of molars with dental appliances. As seen in Fig. 5, this alternate embodiment comprises a smaller, bracket 200 with an almost "domed" spherical shape. By conforming the mass of the bracket 200 to a more central area, the bracket 200 retains its strength. Yet, because the size of the bracket 200 is reduced, and the profile is even more rounded than in configurations useful for anteriorly located teeth, patient comfort is retained.

The benefits derived from this bracket are three-fold. First, the cross-sectional area of the tie wings is maximized in order to bear more archwire torque forces. This can best be seen in Figure 3. It will be noted that the narrowest portion of the tie wings are in general larger than those presently created in present dental brackets.

Second, the brackets are easier to manufacture. Vertical cross-sectional edges are avoided by the creation of the round edges presently seen in the bracket 10. This allows easier tooling during the manufacture of the brackets, or easier growing of sapphire crystalline type brackets, and easier pressing of polycyrstalline type brackets.

Third, because the base 20 is reduced in area, the overall size of the bracket will be necessarily reduced. For this reason, the strength of the tie wings (especially in the cross-sectional area) becomes extremely important, in order to adequately support the archwire torque created during tightening of the archwire in the mouth. In addition, the reduced surface area makes bracket removal easier.

Finally, and perhaps most importantly, the overall shape of the bracket creates patient comfort. The reduction of any squared edges and the overall hemispherical shape of the bracket produces less irritation on the buccal or labial lining, and greatly reduces any discomfort to the patient. The brackets perform the same function, in the same way, but are able to be more easily and comfortably applied to the teeth.

While the present invention has been described in connection with a presently preferred embodiment, it will be understood that the scope of the invention is to be determined from the attached claims and their equivalents.

## Claims

1. An improved dental bracket comprising:
a base for attachment to a tooth;
a gingival tie wing and an occlusal tie wing attached to said base and separated by an archwire slot, said dental bracket, in use, being attached to the tooth such that said archwire slot is aligned with the occlusal plane of the mouth;
said occlusal tie wing facing the occlusal side of said archwire slot and configured with a generally curved edge;
said gingival tie wing facing the gingival side of said archwire slot and configured with a generally curved edge culminating in a neck-shaped post having a pair of generally curved ligature edges;
such that the overall shape of said bracket is generally oval with smooth edges facing its buccal surface.

2. The dental bracket of claim 1 such that when said bracket is emplaced on the tooth, said post is aligned with the crown long axis of the tooth.

3. The dental bracket of claim 2 wherein said gingival and occlusal tie wings are separated from said base by means of an archwire slot support such that said gingival and occlusal tie wings generally curve around said support along said rounded edges.

4. An improved dental bracket configuration comprising:

a generally rectangular base for attachment to a tooth;

an archwire support attached to said base, said archwire support surrounding an archwire slot and attached on either side of said archwire slot to a pair of tie wings;

said tie wings comprising an occlusal tie wing and a gingival tie wing, both of said tie wings having a generally round shape without any corners about either side of said support;

such that when positioned on said tooth, said archwire slot is aligned with the occlusal plane of the mouth.

5. The dental bracket of claim 4 wherein said gingival tie wing contains a ligature post aligned with the crown long axis of the tooth, said post containing a ligature knob protruding from said generally round surface.

6. The dental bracket of claim 5 wherein said ligature knob comprises a pair of ligature heads joined by a neck attached to the body of said gingival tie wing.

7. The dental bracket of claim 6 wherein said tie wings conform to a generally spherical shape about said tooth such that said ligature fits securely around either of said tie wings within said sphere.

8. A dental bracket comprising a generally hemispherical gingival tie wing and a generally hemispherical occlusal tie wing separated by an archwire slot aligned with the occlusal plane of the tooth.

9. The dental bracket of claim 8 wherein said gingival tie wing contains a ligature knob aligned with the crown long axis of the tooth.

10. The dental bracket of claim 9 further comprising a base attachable to said tooth and connected to said tie wings such that a space is created between said tie wings and said tooth for the placement of ligature wires.

11. The bracket of claim 10 wherein the surfaces of said bracket exposed to the buccal surface contain no squared edges.

12. An improved dental bracket configuration comprising:

a generally rectangular base for attachment to a tooth; and

an archwire support attached to said base, said archwire support surrounding an archwire slot and covered by a generally curved surface to create a dome shape to contact the buccal surface.

EP 0 389 223 A2

FIG-1

FIG-2

FIG-3

FIG-4

*48*

*46*

*44*

*42*

*40*

*35*

*30*

*20*

*50*

*10*

FIG-5

*200*